# EUROPEAN PATENT SPECIFICATION

(11) **EP 1 355 136 B1**
(45) Date of publication and mention of the grant of the patent: **08.03.2006**
(21) Application number: 03290856.8
(22) Date of filing: 07.04.2003
(51) Int. Cl.: G01G 15/00, H04L 12/28, H04L 29/00

(54) **Method for generating a user interface on a HAVi device for the control of a non-HAVi device**
Verfahren zur Erzeugung einer graphischen Benutzerschnittstelle auf einem HAVi Gerät für die Steuerung eines nicht HAVi Gerätes
Procédé de géneration d'une interface utilisateur graphique sur un dispositif HAVi pour commander un dispositif non-HAVi

(30) Priority: 18.04.2002 EP 02090147
(43) Date of publication of application: 22.10.2003
(73) Proprietor: Thomson Licensing, 92100 Boulogne Billancourt (FR)
(72) Inventor: Hütter, Ingo, 30982 Pattensen (DE)
(74) Representative: Schäferjohann, Volker

(56) References cited:
- EP-A- 1 058 422
- EP-A- 1 286 260
- WO-A-01/01632
- WO-A-02/09384
- SIETMANN R: "UNIVERSAL PLUG AND PLAY" FUNKSCHAU, FRANZIS-VERLAG K.G. MUNCHEN, DE, vol. 72, no. 19, 3 September 1999 (1999-09-03), pages 76-78, XP000930829 ISSN: 0016-2841
- CORCORAN P M ET AL: "BROWSER-STYLE INTERFACES TO A HOME AUTOMATION NETWORK" IEEE TRANSACTIONS ON CONSUMER ELECTRONICS, IEEE INC. NEW YORK, US, vol. 43, no. 4, 1 November 1997 (1997-11-01), pages 1063-1069, XP000768559 ISSN: 0098-3063
- CORCORAN P M: "MAPPING HOME-NETWORK APPLIANCES TO TCP/IP SOCKETS USING A THREE-TIERED HOME GATEWAY ARCHITECTURE" IEEE TRANSACTIONS ON CONSUMER ELECTRONICS, IEEE INC. NEW YORK, US, vol. 44, no. 3, August 1998 (1998-08), pages 729-736, XP000851577 ISSN: 0098-3063

## Description

The invention relates to a method for generating a user interface on a HAVi device for the control of a Non-HAVi device. This invention in particular applies to the field of domestic communication networks. The invention also concerns a gateway for use in the method for generating a user interface as well as two types of computer programme products.

### Background

A few years ago the typical home audio/video equipment setup was characterized by a mix of CE devices of different types, e.g. a radio receiver, a CD player, a pair of speakers, a television set, a video cassette recorder, a tape deck, a DVD player, a satellite receiver and the like. For interaction of the devices point-to-point connection of analogue/digital input/outputs had to be made. For this purpose various kinds of different wires were available like Scart cables, Cinch cables, Coax cables, optical fibre, and so forth.

Meanwhile there are strong activities in the consumer electronics field to avoid this type of point-to-point connections. A number of standards for home networks already exist that can be used to connect all the different components to each other via a single type of network cable. In the consumer electronics field first of all the IEEE1394 bus standard should be mentioned here. The IEEE1394 bus system provides for a high data rate communication between the CE devices. The cable version supports data rates of 100, 200 and 400 Mbit/s. This is enough to transport asynchronous data for controlling a network station as well as isochronous audio and video streams in parallel. Isochronous and asynchronous data transfer modes are supported. However, the IEEE1394 standard specifies only the lower layers of the ISO/OSI reference model, namely the physical layer, the data link layer and the transaction layer. Therefore, the higher layers namely transport layer, session layer, presentation layer and application layer are left open for proprietary definition.

A consortium of consumer electronics companies worked on a standard for the audio/video electronics and the multimedia industry wherein the higher communication layers have been specified. This standard is referred to as the HAVi standard, where HAVi stands for Home Audio/Video interoperability. This standard primarily has defined an interoperability middleware that ensures that products of different vendors can interoperate, i.e. cooperate to perform application tasks. The application layer remains completely open to proprietary solutions.

Another consortium of companies, in particular computer companies including Microsoft, started another initiative for setting up a network control software stack based on Internet Protocols (IP). This network system is called UPnP (Universal Plug and Play) network. This system shall be open to all kinds of electronic components that could be integrated in a network in particular personal computers, but also electronic appliances in a household like refrigerators, microwave ovens, heating control, air conditioning control, security systems, washing machines and the like. The UPnP network system supports controlling of all these appliances via the Internet, therefore, even if somebody is on a journey, he can manage to monitor and control his home appliances.

Even though HAVi and UPnP have sometimes been seen as competitors, and in some ways they are, they serve somewhat different markets and have somewhat different goals. It is therefore foreseen a scenario that both networks exist in parallel in a household and that bridging is possible between the two for data exchange and interaction between UPnP network components and HAVi network components. This however calls for the creation of the bridging technology between HAVi and UPnP networks.

When talking of a bridge between UPnP and HAVi networks this technically means that a data packet is transferred to the other side on the data link layer. When transferring a data packet on a higher layer of the ISO/OSI reference model the bridging device is then called a gateway. As the data packets are transferred from HAVi to UPnP network or vice versa on a higher layer, the bridging device will be called gateway hereinafter. This is not meant limiting however.

With the gateway in between both networks, it shall be possible to control a HAVi device in the HAVi network from a UPnP device in the UPnP network. Also it shall be supported to control a UPnP device from a HAVi device.

For the controlling of the HAVi device from a UPnP device it is required to represent the HAVi devices as a UPnP device. Here, specific problems need to be solved that are not part of the present invention.

The invention deals with the problem of controlling a UPnP device from a HAVi device. To understand the invention it is advantageous to first explain the architecture of the HAVi system. According to the HAVi architecture a CE device in the network is controlled through abstract representations of the CE device. The architecture allows a module (e.g. device representation, controller, etc.) to send commands or control information to another module in the home network. A HAVi-compliant device contains data (above abstract representation referred to as device control module DCM) relating to its user interface and to its control capabilities. This data includes for example HAVi byte code (Java code) that can be uploaded and executed by other devices on the network. A HAVi-compliant device has, as a minimum, enough functionality to communicate with other devices in the HAVi network. During interaction, devices may exchange control data and application data in a peer-to-peer fashion. The HAVi specification distinguishes between controllers and controlled devices. A controller is a device that acts as a host for a controlled device. A controller hosts the abstract representation for the controlled devices.

The HAVi specification defines HAVi compliant CE devices in the following categories: Full-AV devices (FAVs), Intermediate-AV devices (IAVs) and Base-AV devices (BAVs):

An FAV contains a complete set-of software components of the HAVi software architecture. An FAV is characterized in that it has a run-time environment for HAVi byte code. This means it has a JAVA virtual machine. This enables an FAV device to download JAVA byte code form other devices, e.g. for providing enhanced capability for their control. An FAV may be formed by e.g. a HAVi compliant set top box, a HAVi compliant digital TV receiver or a home personal computer. For example an intelligent TV receiver can be the HAVi controller of other devices connected to the network. The receiver gets the byte code uploaded from another device in the network. An icon representing this device can be made to appear on the TV screen and user interaction with the icon may cause elements of the control programme to actuate the represented device in a pre-specified manner.

An IAV does not provide a run-time environment for HAVi byte code but may provide native support for control of specific devices on the home network. An IAV comprises embedded software elements that provide an interface for controlling general functions of the specific devices. These software elements need not be HAVi byte code and may be implemented as native applications on the IAV that use native interfaces to access other devices.

A BAV may provide uploadable HAVi byte code but does not host any of the software elements of the HAVi architecture. A BAV is controllable through an FAV by means of the former uploaded byte code. A BAV is controllable through an IAV via its DCM/FCM that has been uploaded by an FAV. Communication between an FAV or an IAV on the one hand and a BAV on the other hand requires that the HAVi byte code is instantiated by an FAV.

The HAVi specification includes a number of main software elements that are listed below. For a more detailed explanation of these elements it is referred to the HAVi specification: An existing version of the HAVi specification is V1.1, published May 15, 2001 and available from HAVi, INC., 2694 Bishop Drive, Suite 275 San Ramon, CA 94683, USA.
1. The 1394 communications media manager (CMM) acts as an interface between the other software elements and IEEE1394 bus.
2. An event manager (EM) informs the various software elements of events an the network such as the changes in the network configuration that occur when appliances (devices) are added or removed from the network.
3. A registry - maintains information about the appliances connected to the network and the functions they offer. Applications can obtain this information from the registry.
4. A messaging system (MS) - serves as an API (Application Programming Interface) that facilitates communication between the software elements of the various appliances on the network. The messaging system provides the HAVi software elements with communication facilities. It is independent of the network and the transport layers. The messaging system is in charge of allocating identifiers for the abstract representations at the FAV or IAV. These identifiers are first used by the abstract representations to register at the FAV or IAV. Then they are used by the abstract representations to identify each other within the home network. When a first abstract representation wants to send a message to another abstract representation it has to use the identifier of the latter while invoking the messaging API.
5. A device control module (DCM) - represents an appliance on the network. An application program can interact directly with a DCM. Within a DCM a number of functional control modules (FCM) may be contained. In a HAVi network, a functionality is represented by an FCM. Hierarchically speaking an FCM is always contained in a DCM, representing a device. A DCM may contain more than one FCM (e.g. a DCM representing a digital VCR contains a Tuner FCM and a VCR FCM) but there is only one DCM for each HAVi device.
6. A DCM manager - installs the DCMs. It.automatically reacts to changes in the network by installing new DCMs for new BAV appliances.
7. A data driven interaction (DDI) controller - renders GUI (Graphical User Interface) on an appliance display on behalf of a HAVi software element. It supports a wide range of displays varying from graphical to text only.
8. A stream manager (SMGR) - creates connections and routes real time AV streams between two or more appliances on the network.

Basic HAVi interoperability addresses the general need to allow existing devices to communicate at a basic level of functionality. To achieve this, HAVi defines and uses a generic set of control messages that enable one device to communicate with another device and a set of event messages that it should reasonably expect from a device given its class (TV, VCR, DVD player, etc). To support this approach a basic set of mechanism is required: Device discovery; Communication; and a HAVi message set. As to device discovery: Each device in the home network needs a well-defined method that allows it to advertise its capabilities to others. The HAVi approach is to utilize so-called SDD data: Self Describing Data. The SDD data is required on all HAVi devices in the network. SDD data contains information about the device, which can be accessed by other devices. The SDD data contains as a minimum enough information to allow instantiation of a so-called embedded device control module (embedded DCM) An embedded DCM is a piece of code preinstalled on a controlling IAV or FAV in a platform dependent code and using native interfaces to access the IAVs for FAVs resources. As mentioned above, a DCM for a device is a software element that provides an interface for control of general functions of the device. Instantiation of an embedded DCM results in registration of the devices capabilities with a registry. The registry provides a directory service and enables an object on the network to locate another object on the network. Registering allows application to infer the basic set of command messages that can be sent a specific device on the network.

As to communication: Once an application has determined the capabilities of a device the application needs to be able to access those capabilities. This requires a general communication facility allowing applications to issue requests to devices. The service is provided by the HAVi messaging systems and DCMs. The application sends HAVi messages to DCMs, the DCM then engage in proprietary communication with the devices.

As to HAVI message sets: In order to support basic interoperability a well defined set of messages is required that must be supported by all devices of a particular known class (e.g. the class of TV receivers, the class of VCRs, the class of DVD players etc.). This ensures that a device can work with existing devices, as well as with future devices, irrespective of the manufacturer. These three basic requirements support a certain minimal level of interoperability. Since any device can query the capabilities of another device via the registry, any device can determine the message set supported by another device. Since applications have access to the messaging system, any device can interact with any other device.

Basic HAVi interoperability ensures that devices can -interoperate at a basic level of functionality. However, a more extended mechanism is needed to also allow a device to communicate to other devices with any additional functionality that is not present in the embedded DCMs on an FAV. For example, embedded DCMs may not support all features of existing products and are unlikely to support those totally new ones of future product categories.

HAVi 'Level 2' interoperability provides this mechanism. To achieve this the HAVi architecture allows uploadable DCMs as an alternative to so called embedded device control modules. An uploadable DCM may be provided by any suitable source, but a likely technique is to place the uploadable DCM in the HAVI SDD data on the BAV device and upload from the BAV to the FAV device when the BAV is connected to the home network. Because the HAVi architecture is vendor-neutral it is necessary that the uploaded DCM will work on a variety of FAV devices all with potentially different hardware architectures. To achieve this, uploaded DCMs are implemented in HAVi (JAVA) byte code. The Java byte code run-time environment on FAV devices supports the instantiation and execution of uploaded DCMs. Once created and running within an FAV device the DCM communicates with the BAV devices in the same manner as described above.

Under the new scenario, where a HAVi network is connected with a UPnP network via a gateway, and a UPnP device shall be controlled by a HAVi FAV device, the additional problem occurs that none of the UPnP devices provides a HAVi DCM that could be uploaded to the HAVI FAV device. Therefore, neither basic nor level 2 interoperability is available for the controlling of UPnP devices from a HAVi network station.

From WO-A-02/09384 a HAVi - Non-Havi network bridge is known, in which it is proposed to provide software means in the bridge, that perform a translation of UPnP service descriptions to HAVi DDT data.

From WO-A-01/01632 a HAVi - Non-Havi network bridge is known, in which it is proposed to provide a software element factory in the gateway that is capable of generating a HAVi DCM for the control of a Non-HAVi network station.

### Invention

It is an object of the invention to solve the problem of controlling a Non-HAVi compliant device in a Non-HAVi network from a HAVi, compliant FAV device in a HAVi network via a gateway. For some of the UPnP devices there could exist in the gateway device a corresponding representation in the form of a DCM with an embedded device specific FCM. This DCM/FCM could be used for generating a user interface on the HAVi FAV device for controlling the UPnP device using basic interoperability. The user could, therefore, generate control commands for the UPnP device that need to be interpreted in the gateway and transformed into a corresponding UPnP command that would be understood in the UPnP device to be controlled.

A problem is however that there are certainly UPnP devices existing for which no corresponding representation in the form of a FCM, exist in the HAVi system. For such a case there is the possibility implemented in the HAVi system to generate a so-called generic FCM. In case of an unknown UPnP device, the gateway can only provide a DCM having embedded a generic FCM for the control of the UPnP device. With this generic FCM the HAVi FAV device cannot generate a user interface because none of the functions of the UPnP device are known in the generic FCM. This is the crux of the problem underlying the invention.

The invention solves the problem with the means of the independent claims 1, 7, 10 and 13. The invention utilizes the possibility in the HAVi system to download from a DCM a so-called HAVLET that is executable JAVA byte code to generate a user interface on the HAVi controller. This HAVLET software piece interacts with the DCM for the Non-HAVi devices stored and executed in the gateway. The Non-Havi DCM. contains a specialized Non-HAVi FCM that includes the software routines for requesting the function descriptions of a Non-HAVi device and for forwarding them to the HAVI FAV device. The HAVLET running on the HAVi FAV device takes the function descriptions of the Non-HAVi device and generates a corresponding user interface with these function descriptions.

Advantageous, modifications and improvements of the invention are listed in the dependent claims. Very advantageous is, if the FCM running on the gateway comprises means for translating the function descriptions read from the Non-HAVi device (23) into a data form supported by the HAVi system before forwarding to the HAVi controller. This improvement simplifies the HAVLET software running on the HAVi controller very much. The means for translating the function description of'the Non-HAvi device need not be included in the HAVLET, thus making it unnecessary to upload a corresponding software code into the HAVi FAV device, thereby reducing memory requirements in the HAVI FAV device. Likewise the processor of the HAVi FAV device is relieved.

The invention can best be utilized if a HAVi network needs to be combined with an IP-based network, e.g. the UPnP network. In case of a UPnP network a UPnP device is represented by means of so-called XML descriptions for each function of a UPnP device. The XML descriptions will be requested by the specialised function control module which is of the type generic FCM (according to the HAVi specification) running on the gateway, translated and then be forwarded to the HAVLET executed by the HAVi controller. For each translated function description the HAVLET will generate a graphical representation preferably in the form of a button, slider, query button or input field together with a symbol or expression that explains the meaning.

A gateway according to the invention is claimed in independent claim 7.

Independent claim 10 claims a computer programme product, namely a function control module FCM for the gateway according to the invention.

Independent claim 13 claims a computer programme product, in particular HAVLET, running on the HAVi controller according to the invention.

### Drawings

Exemplary embodiments of the invention are illustrated in the drawings and are explained in more detail in the following description.

In the figures:
- Fig. 1: shows an example of a HAVi network and a UPnP network connected to each other via a gateway;
- Fig. 2: shows the basic software elements interacting to each other of the UPnP device, the gateway and the HAVi controller, and;
- Fig. 3: shows an example of a user interface for the control of a UPnP security camera displayed on the HAVi controllers.

### Exemplary embodiments of the invention

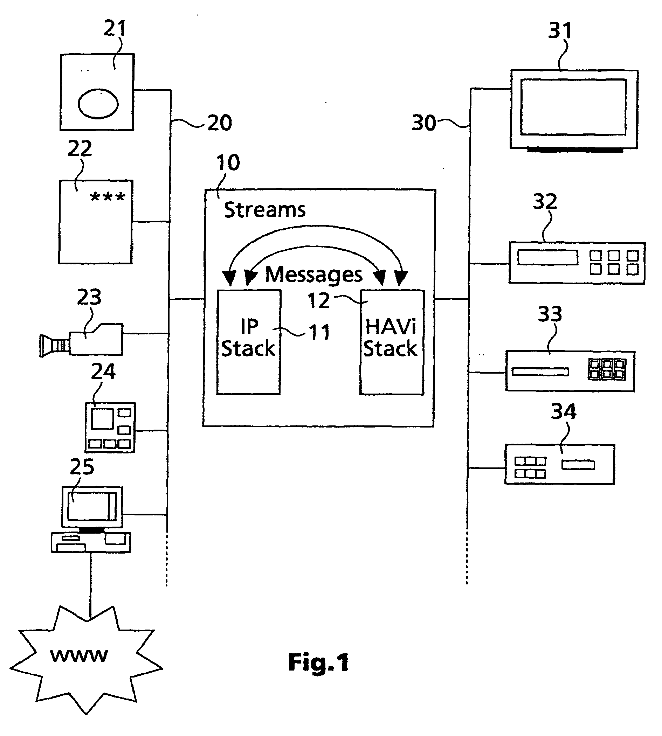

Fig. 1 depicts the principle structure of two networks being connected to each other via a gateway 10. On the left side of the figure it is shown a UPnP network. As an example reference number 21 denotes a washing machine, reference number 22 a refrigerator, reference number 23 a security camera, reference 24 a heating control unit, and reference 25 a personal computer having an ISDN/DSL Internet connection. All these UPnP devices are connected to an Ethernet data bus 20 for data exchange. The Ethernet bus lines are also connected with gateway 10. On the right side of figure 1 is shown a HAVi network. The reference number 31 marks a TV set, reference number 32 denotes a VCR, reference number 33 denotes a DVD player and reference number 34.stands for a set top box such as a digital satellite receiver. The HAVi network stations are connected to an IEEE1394 bus 30 for data exchange. The gateway 10 is also connected to the 1394 bus 30. The gateway 10 comprises an IP protocol stack 11, on one side, a HAVi protocol stack 12 on the other side as well as software for carrying out the translation'or mapping of control messages and events from one network to the other.

The HAVi as well as the UPnP specifications are known in the art. Therefore, there is no need to explain all the details in these specifications for the purpose of disclosing the present invention. It is therefore expressively referred to the HAVi specification as well as the UPnP specification for this purpose. The UPnP specification can be obtained from the UPnP Forum managed by Microsoft Incorporation.

As mentioned before the UPnP network system is based on the existing Internet protocols. A graphical user interface (GUI) for controlling UPnP devices from an UPnP controller, e.g. the personal computer 25 may consist of a plurality of icons displayed on the computer monitor. When a user selects an icon, the HTML pages are retrieved from of the device in question. The HTML pages are displayed for the user. This allows the user to control the given device. In the UPnP specification it is defined that each UPnP device comprises a list of services, which are provided by the device. Each of these services is described in an XML document, where XML stands for Extension Mark-up Language, i.e. Internet technology. Each XML document contains a detailed description of all control possibilities within the service. These XML documents will be utilized for controlling a UPnP device from a HAVi controller.

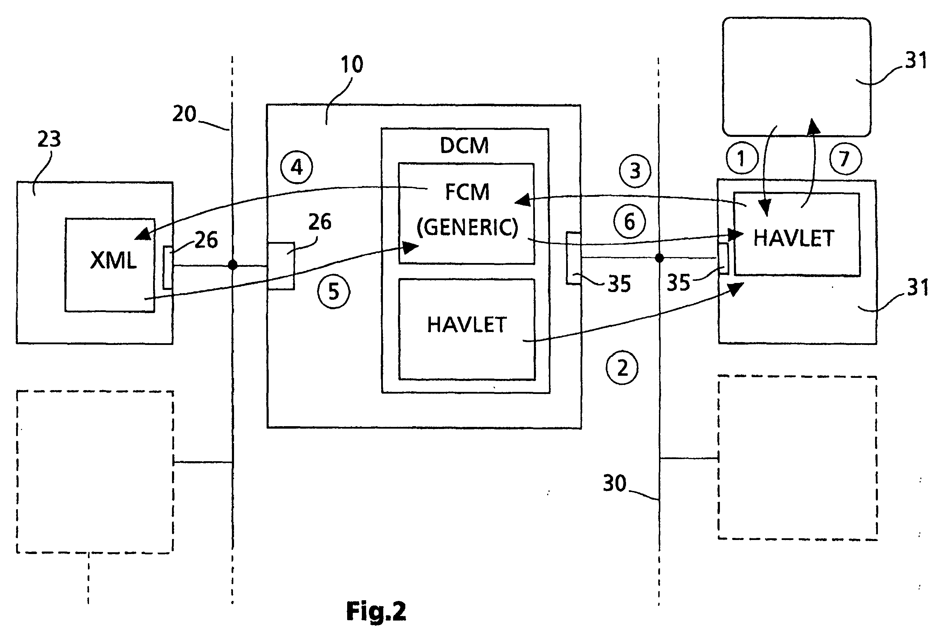

The control process of the UPnP device from a HAVi FAV device is illustrated in Fig. 2. Identical reference numbers denote the same components as shown in Fig. 1 and need not be explained again. In Fig. 2 the Ethernet interface circuit 26 with which UPnP devices as well as the gateway are equipped are separately shown. Similarly the 1394 bus interface 35 for the HAVi network components and the gateway 10 are likewise shown. In addition the basic software elements of the security camera 23, the gateway 10 and the TV set 31 are shown in Fig. 2. A security camera 23 contains an XML document in which the control possibilities for the security camera are listed. The important software element of the gateway is a device control module DCM containing a specified function control module FCM as well as an executable JAVA programme HAVLET. The JAVA programme HAVLET is provided for an upload to a HAVi FAV device during the configuration phase of the HAVi network. Therefore, the very important software element of the HAVi controller 31 concerns this HAVLET.

For controlling the security camera 23 the gateway interacts with the security camera 23 and the TV set 31 as follows.

After finishing of the configuration phase in both networks, all the network components within the HAVi network as well as in the UPnP network can be controlled from the TV set 31. A user interface for controlling these devices is built in the form of a list of icons for each controllable device. It is the communications media manager CMM, the event manager. EM, the registry and the messaging system MS of the HAVi protocol stack, that are utilized for collecting the information of all controllable elements be it in the HAVi network or in the UPnP networks. Of course, the gateway 10 includes corresponding software elements and interfaces so that the mapping of the UPnP devices in the HAVi registry is possible. This process however is pre-supposed to be prior art and will not be explained in further detail here.

A user may now wish to control the security camera from the TV set 31 in the HAVi network. For this purpose he selects the corresponding icon on the TV screen. This event will start the download of the HAVLET into the internal memory of the TV set 31. Right after the download, the execution of the HAVLET is started. The HAVLET is an executable JAVA programme. As JAVA is a platform independent programming language, it will run on each HAVi FAV device that has a run-time environment for JAVA byte code.

Third, the executed HAVLET sends a request for retrieving information about the security camera 23 to the gateway 10. This request will be accepted by the running UPnP function control module FCM that itself retrieves the XML document/s stored on the webserver of the security camera 23. Each XML document contains descriptions of the control possibilities for the security camera 23. The FCM translates the XML descriptions into a struct (a set of variables) and forwards them to the HAVLET running in the TV set 31. The HAVLET then takes these function descriptions and generates for each controllable element a graphical representation such as button, slider, query button, input field or the like to generate the graphical user interface for the control of the security camera on the TV screen. The flow of information is illustrated in Fig. 2 with arrows and the numbering expresses the order of interaction.

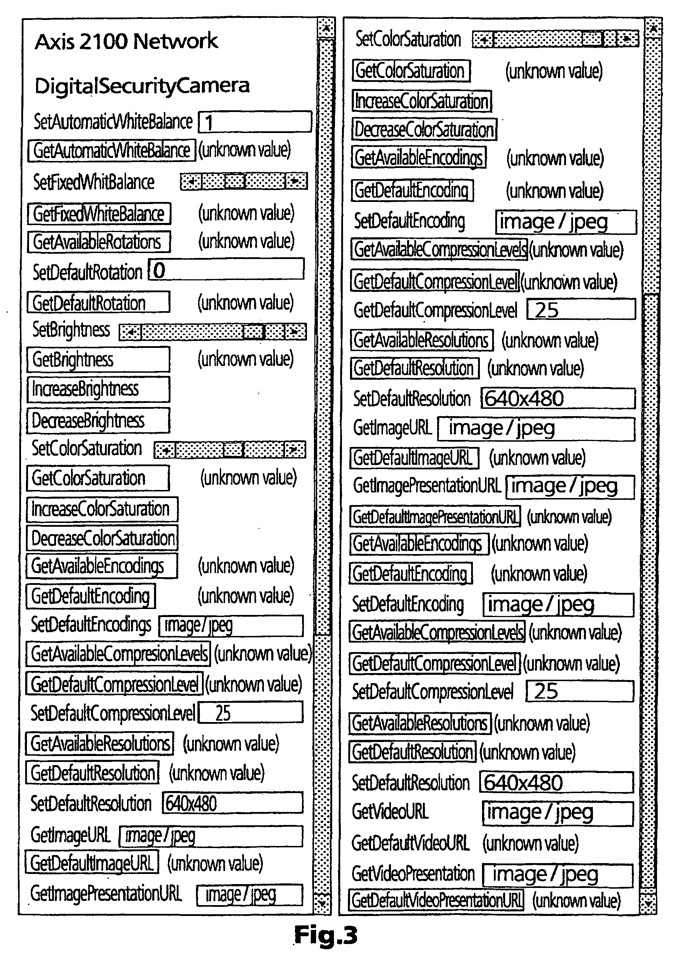

The graphical user interface for the security camera 23 is shown in Fig. 3. For each controllable element of the security camera a graphical representation is generated, e.g. for the brightness setting a slider is shown on the TV screen. With a mouse pointer the brightness can directly be controlled by means of the left/right buttons positioned at the left and right side of the slider. Also the slider itself could be dragged to the wanted position as known from a great variety of computer menus. At the left side of the slider for the brightness adjustment the expression Set-Brightness is shown in writing. This expression is directly taken over from the XML description for this controllable element. The FCM running in the gateway does not necessarily know the meaning of this expression. This is evident if one considers that a new type of product can be integrated in the UPnP network for which today nobody knows what the controllable elements are. In such a case the user has to make the right interpretation of this controllable element by himself. Below the brightness slider a GetBrightness button is positioned. This is an example of a query button. By depressing this query button the current brightness set value will be read out and displayed beside the button. Below the GetBrightness button are positioned simple buttons Increase-Brightness and DecreaseBrightness. These buttons have the same effect as the right and left buttons of the SetBrightness slider. An example of an input field is the field Set-DefaultRotation. Here a number is requested with this field and shall be entered into the input mask. The input parameter determines the rotation of the security camera for getting another view. Instead of displaying the extracted expression for the respective control element derived from the XML description, a self-explanatory symbol could be displayed in the user interface. This however calls for the need to have pre-defined user interface components installed in the HAVLET for the different services of the various possible UPnP devices. Even if a new type of appliance will be integrated in the UPnP network, the pre-defined user interface component could be used if this new device provides a service for which the user interface components are already provided in the HAVLET. For unknown services however, this solution would not work. Another solution is that there will be a mix of both different solutions for one service. For all the parameters in the XML description to which already a symbol had been assigned, a corresponding symbol could be displayed in the user interface. For the unknown parameters however, the corresponding expressions need to be shown.

The XML document of a UPnP device can be regarded as a standard implementation of the UPnP specification. For the realization of the present invention no extraordinary programming has to be made here. The basic software elements for realization of the present invention are the UPnP FCM running on the gateway and the HAVLET uploaded into the HAVi FAV device. Both software elements include extraordinary routines for the realization of the invention.

There is a function control module for the UPnP network. It is somehow a 'generic' FCM that will always be used for the control of any UPnP device. The programming language is JAVA. This is a well-known programming language widely used so that the particular syntax need not be explained here. A routine for extracting the services from the XML document is included. This routine therefore extracts which kind of service the requested UPnP device offers. For example the UPnP security camera offers the service of providing a stream of video pictures in a particular format like JPEG or Image at a certain compression level and resolution.

A GET_SERVICE_DESCRIPTION routine requests the information how many services the UPnP device offers.
With a GET_SERVICE_INFORMATION_LIST routine the information about every control possibility of the selected service can be retrieved. A routine PERFORM_CONTROL_COMMAND is provided for sending a control command to a UPnP device. A routine PERFORM_PEVICE_VARIABLE_QUERY is provided for retrieving the current variable value from a UPnP device. These routines will be executed upon a request from the HAVLET that runs on the HAVi device.

For the routine call corresponding instructions are hold in the second part of the programme listing. Expressively it is referred to a routine call DO_GET_SERVICE_DESCRIPTION, and DO_GET_SERVICE_INFORMATION_LIST A further important routine for the implementation of the invention is a routins sendControlCommand for sending a control command to the UPnP device. Within this routine a response message is also evaluated and forwarded to the HAVLET in the HAVi device. Also important for the implementation of the invention is a routine queryDeviceVariable. This routine is started if the HAVLET has sent a corresponding request. For example if the user has pressed a query button, this routine will be called. Again in this routine a response message will be sent back to the HAVi device. With a routine receiveHttpNotifyData UPnP events will be handled.

The JAVA source code of a HAVLET implementing the invention is not shown. The main task of the HAVLET is to build the user interface for controlling a UPnP device. The HAVLET contains corresponding routines for getting the service descriptions for a UPnP device for getting the service information list, for performing a control command and for performing a device variable query

The function control module is integrated in a device control module according to the HAVi specification. Therefore what needs to be done is to programme a device control module having embedded the function control module as above mentioned. This programme is regarded to be a standard implementation of the HAVi specification that needs not to be explained in detail.

The part of the programme that performs the translation of the XML descriptions into a data form supported by the HAVi system, is included in a routine called service description routine. The XML descriptions are basically in text format. These XML descriptions are evaluated. For example a programme part evaluates whether the XML descriptions contain some actions. These actions correspond to the controllable elements of the UPnP device. They are translated into the HAVi-typical form of a variable set called 'struct'. This is performed by parsing the XML description and storing all information of interest in its local instance variables.

## Claims

1. Method for generating a user interface on a HAVi device for the control of a Non-HAVi device, where HAVi stands for Home Audio/Video interoperability, the HAVi device (31) being a station of a HAVi network and the Non-HAVi device (23) being a station of a Non-HAVi network, both networks being connected to each other by a gateway device (10), **characterized in that** the gateway device (10) runs a HAVi function control module (FCM) for the Non-HAVi devices that requests the descriptions of the functions of the Non-HAVi device (23) to be controlled and forwards them to the HAVi device (31) that generates the corresponding user interface components for the functions of the Non-HAVi device (23) by means of a JAVA programme (HAVLET) that runs on the HAVi device (31), wherein the gateway device (10) uploads the JAVA programme (HAVLET) to the HAVi device (31).

2. Method according to claim 1, wherein the function control module (FCM) translates the function descriptions read from the Non-HAVi device (23) into a data form supported by the HAVi system before forwarding to the HAVi device, (31).

3. Method according to claim 1, wherein the JAVA programme (HAVLET) translates the function descriptions read from the Non-HAVi device (23) into a data form supported by the HAVi system.

4. Method according to one of the previous claims, wherein the HAVi device (31) on which the user interface for controlling the Non-HAVi device (23) is generated is a HAVi device of the FAV type, wherein FAV means Full Audio/Video HAVi device.

5. Method according to one of the previous claims, wherein the Non-HAVi network is an IP based network, in particular a UPnP network, where UPnP stands for the Universal Plug and Play network system.

6. Method according to claim 5, wherein the function descriptions of the Non-HAVi device (23) are XML descriptions, where XML stands for Extension Mark-up Language.

7. Gateway device for use in a method according to one of the previous claims, comprising an interface (35) for a HAVi network and comprising an interface (26) for a Non-HAVi network, **characterized in that** the gateway device (10) comprises a HAVi function control module (FCM) that includes means for requesting the function descriptions of a Non-HAVi device (23) and means for forwarding the function descriptions to the network station of the HAVi network on which a user interface for controlling the Non-HAVi (23) device shall be generated and further comprising a JAVA programme (HAVLET) that includes means for generating a user interface with the function descriptions of the Non-HAVi device (23), this JAVA programme (HAVLET) being provided for an upload into a HAVi device (31).

8. Gateway according to claim 7, wherein the function control module (FCM) comprises means for translating the function descriptions read from the Non-HAVi device (23) into a data form supported by the HAVi system before forwarding to the HAVi network.

9. Gateway according to claim 7, wherein the JAVA programme (HAVLET) comprises means for translating the function descriptions read from the Non-HAVi device (23) into a data form supported by the HAVi system

10. Computer programme product, in form of a HAVi function control module (FCM) directly loadable into the internal memory of a gateway device (10) according to one of the claims 7 to 9, comprising means for requesting function descriptions of a Non-HAVi device (23) and means for forwarding the function descriptions to a network station of a HAVi network on which a user interface for controlling the Non-HAVi device (23) shall be generated when said product is executed by a processor of the gateway device (10).

11. Computer programme product according to claim 10, further comprising means for translating the function descriptions read from the Non-HAVi device (23) into a data form supported by the HAVi system before forwarding to the HAVi network.

12. Computer programme product according to claim 10 or 11, wherein the function descriptions of the Non-HAVI device (23) are XML descriptions, where XML stands for Extension Mark-up Language.

13. Computer programme product, in form of a JAVA programme (HAVLET), directly loadable into the internal memory of a HAVi device (31) of a HAVi network, comprising means for generating a user interface for the control of a Non-HAVi device (23) with the function descriptions retrieved from the Non-HAVi device (23), when said product is executed by a processor of said HAVi device (31).

14. Computer, programme product according to claim 13, wherein the retrieved function descriptions are translated XML descriptions of the Non-HAVi device (23), where XML stands for Extension.Mark-up Language and the XML descriptions being translated into a data form supported by the HAVi system.

15. Computer programme product according to claim 13, further comprising means for translating the function descriptions retrieved from the Non-HAVi device (23) into a data form that is supported by the HAVi system and the function descriptions are XML descriptions, where XML stand for Extension Mark-up Language.

16. Computer programme product according to one of claims 13 to 15, wherein the means for generating a user interface comprise means for assigning to a translated function description the appropriate graphical representation together with a symbol or expression that explains the meaning of the function description.

17. Computer programme product according to claim 17, wherein the graphical representation is in the form of a button, slider, query button or input field.

## Patentansprüche

1. Verfahren zur Erzeugung einer Benutzer-Schnittstelle in einem HAVi-Gerät für die Steuerung eines Nicht-HAVi-Gerätes, wobei HAVi für Heim-Audio-Video-Interoperabilität steht, wobei das HAVi-Gerät (31) eine Station eines HAVi-Netzwerks und das Nicht-HAVi-Gerät (23) eine Station eines Nicht-HAVi-Netzwerks ist, und wobei beide Netzwerke miteinander durch eine Gateway-Vorrichtung (10) verbunden sind, **dadurch gekennzeichnet, dass** die Gateway-Vorrichtung (10) ein HAVi-Funktionssteuer-Modul (FCM) für die Nicht-HAVi-Geräte betreibt, der die Beschreibungen der Funktionen des zu steuernden Nicht-HAVi-Gerätes (23) anfordert und sie dem HAVi-Gerät (31) zuführt, das die entsprechenden Benutzer-Schnitt-stellen-Komponenten für die Funktionen des Nicht-HAVi-Gerätes (23) mittels eines JAVA-Programms (HAVLET) erzeugt, das in dem HAVi-Gerät (31) abläuft, wobei die Gateway-Vorrichtung (10) das JAVA-Programm (HAVLET) auf das HAVi-Gerät (31) hochlädt.

2. Verfahren nach Anspruch 1, bei dem der Funktionssteuer-Modul (FCM) die aus dem Nicht-HAVi-Gerät (23) gelesenen Funktionsbeschreibungen in eine Datenform übersetzt, die von dem HAVi-System gestützt ist, bevor die Zuführung zu dem HAVi-Gerät (31) erfolgt.

3. Verfahren nach Anspruch 1, bei dem das JAVA-Programm (HAVLET) die aus dem Nicht-HAVi-Gerät (23) gelesenen Funktionsbeschreibungen in eine von dem HAVi-System gestützte Datenform übersetzt.

4. Verfahren nach einem der vorherigen Ansprüche, bei dem das HAVi-Gerät (31), in dem die Benutzer-Schnittstelle zur Steuerung des Nicht-HAVi-Gerätes (23) erzeugt wird, ein HAVi-Gerät des FAV-Typs ist, wobei FAV volles Audio/Video-HAVi-Gerät bedeutet.

5. Verfahren nach einem der vorherigen Ansprüche, bei dem das Nicht-HAVi-Netzwerk ein Netzwerk auf IP-Basis ist, insbesondere ein UPnP-Netzwerk, wobei UPnP für universelles Plug-and-Play-Netzwerksystem steht.

6. Verfahren nach Anspruch 5, bei dem die Funktionsbeschreibungen des Nicht-HAVi-Gerätes (23) XML-Beschreibungen sind, wobei XML für Erweiterungs-Auszeichnungssprache (Extension Mark-Up Language) steht.

7. Gateway-Vorrichtung zur Verwendung bei einem Verfahren gemäß einem der vorhergehenden Ansprüche, umfassend eine Schnittstelle (35) für ein HAVi-Netzwerk und eine Schnittstelle (26) für ein Nicht-HAVi-Netzwerk, **dadurch gekennzeichnet, dass** die Gateway-Vorrichtung (10) einen HAVi-Funktionssteuer-Modul (FCM) umfasst, der Mittel zum Anfordern der Funktionsbeschreibungen eines Nicht-HAVi-Gerätes (23) und Mittel zum Zuführen der Funktionsbeschreibungen zu der Netzwerkstation des HAVi-Netzwerks enthält, in dem eine Benutzer-Schnittstelle zur Steuerung des Nicht-HAVi-Gerätes (23) erzeugt werden soll, und der ferner ein JAVA-Programm (HAVLET) umfasst, das Mittel zur Erzeugung einer Benutzer-Schnittstelle mit den Funktionsbeschreibungen des Nicht-HAVi-Gerätes (23) enthält, wobei das JAVA-Programm (HAVLET) für eine Hochladung in ein HAVi-Gerät (31) vorgesehen ist.

8. Gateway nach Anspruch 7, bei dem der Funktionssteuer-Modul (FCM) Mittel zum Übersetzen der aus dem Nicht-HAVi-Gerät (23) gelesenen Funktionsbeschreibungen in eine von dem HAVi-System gestützte Datenform umfasst, bevor die Zuführung zu dem HAVi-Netzwerk erfolgt.

9. Gateway nach Anspruch 7, bei dem das JAVA-Programm (HAVLET) Mittel zum Übersetzen der aus dem Nicht-HAVi-Gerät (23) gelesenen Funktionsbeschreibungen in eine von dem HAVi-System gestützte Datenform umfasst.

10. Computer-Programm-Produkt in Form eines HAVi-Funktionssteuer-Moduls (FCM), der direkt in den internen Speicher einer Gateway-Vorrichtung (10) geladen werden kann, gemäß einem der Ansprüche 7 bis 9, umfassend Mittel zum Anfordern von Funktionsbeschreibungen eines Nicht-HAVi-Gerätes und Mittel zum Zuführen der Funktionsbeschreibungen zu einer Netzwerkstation eines HAVi-Netzwerks, in dem eine Benutzer-Schnittstelle zur Steuerung des Nicht-HAVi-Gerätes (23) erzeugt werden soll, wenn das Produkt von einem Prozessor der Gateway-Vorrichtung (10) ausgeführt wird.

11. Computer-Programm-Produkt nach Anspruch 10, das Mittel zum Übersetzen der aus dem Nicht-HAVi-Gerät (23) gelesenen Funktionsbeschreibungen in eine von dem HAVi-System gestützte Datenform umfasst, bevor die Zuführung zu dem HAVi-Netzwerk erfolgt.

12. Computer-Programm-Produkt nach Anspruch 10 oder 11, bei dem die Funktionsbeschreibungen des Nicht-HAVi-Gerätes (23) XML-Beschreibungen sind, wobei XML für Erweiterungs-Auszeichnungssprache steht.

13. Computer-Programm-Produkt in Form eines JAVA-Programms (HAVLET), das direkt in den internen Speicher eines HAVi-Gerätes (31) eines HAVi-Netzwerks geladen werden kann, umfassend Mittel zur Erzeugung einer Benutzer-Schnittstelle für die Steuerung eines Nicht-HAVi-Gerätes (23) mit den von dem Nicht-HAVi-Gerät (23) wiedergewonnenen Funktionsbeschreibungen, wenn das Produkt von einem Prozessor des HAVi-Gerätes (31) ausgeführt wird.

14. Computer-Programm-Produkt nach Anspruch 13, bei dem die wiedergewonnenen Funktionsbeschreibungen übersetzte XML-Beschreibungen des Nicht-HAVi-Gerätes (23) sind, wobei XML für Erweiterungs-Auszeichnungssprache steht, und die XML-Beschreibungen in eine von dem HAVi-System gestützte Datenform übersetzt werden.

15. Computer-Programm-Produkt nach Anspruch 13, das Mittel zum Übersetzen der aus dem Nicht-HAVi-Gerät (23) wiedergewonnenen Funktionsbeschreibungen in eine von dem HAVi-System gestützte Datenform umfasst und die Funktionsbeschreibungen XML-Beschreibungen sind, wobei XML für Erweiterungs-Auszeichnungssprache steht.

16. Computer-Programm-Produkt nach einem der Ansprüche 13 bis 15, bei dem die Mittel zur Erzeugung einer Benutzer-Schnittstelle Mittel umfassen, um einer übersetzten Funktionsbeschreibung die zugehörige graphische Darstellung zusammen mit einem Symbol oder einem Ausdruck zuzuordnen, der die Bedeutung der Funktionsbeschreibung erklärt.

17. Computer-Programm-Produkt nach Anspruch 16, bei dem die graphische Darstellung die Form einer Taste, eines Schiebers, einer Fragetaste oder eines Eingabefeldes hat.

## Revendications

1. Procédé de génération d'une interface utilisateur sur un dispositif HAVi pour commander un dispositif non-HAVi, où HAVi signifie interopérabilité bidirectionnelle pour systèmes Audio/Vidéo, le dispositif HAVi (31) étant un poste d'un réseau HAVi et le dispositif non-HAVi (23) étant un poste d'un réseau non-HAVi, les deux réseaux étant connectés l'un à l'autre par un dispositif passerelle (10), **caractérisé en ce que** le dispositif passerelle (10) lance un module de commande de fonctions HAVi (FCM) pour les dispositifs non-HAVi qui demande les descriptions des fonctions du dispositif non-HAVi (23) à commander et les transmet au dispositif HAVi (31) qui génère les composants interface utilisateur correspondants pour les fonctions du dispositif non-HAVi (31) au moyen d'un programme JAVA (HAVLET) qui fonctionne sur le dispositif HAVi (31), où le dispositif passerelle (10) télécharge le programme JAVA (HAVLET) vers le dispositif HAVi (31).

2. Procédé selon la revendication 1, où le module de commande de fonction (FCM) traduit les descriptions de fonction lues à partir du dispositif non-HAVi (23) en un format de données supporté par le système HAVi avant transmission au dispositif HAVi (31).

3. Procédé selon la revendication 1, où le programme JAVA (HAVLET) traduit les descriptions de fonction lues à partir du dispositif non-HAVi (23) en un format de données supporté par le système HAVi.

4. Procédé selon l'une des revendications précédentes, où le dispositif HAVi (31), sur lequel est générée l'interface utilisateur pour commander le dispositif non-HAVi (23), est un dispositif HAVi de type FAV, où FAV signifie dispositif HAVi Audio/Vidéo Complet.

5. Procédé selon une des revendications précédentes, où le réseau non-HAVi est un réseau basé sur IP, en particulier un réseau UPnP, où UPnP signifie système de réseau prêt à l'emploi universel.

6. Procédé selon la revendication 5, où les descriptions de fonctions du dispositif non-HAVi (23) sont des descriptions XML, où XML signifie langage de balisage d'extension.

7. Un dispositif passerelle pour une utilisation dans un procédé selon l'une des revendications précédentes, comprenant une interface (35) pour un réseau HAVi et comprenant une interface (26) pour un réseau non-HAVi, **caractérisé en ce que** le dispositif passerelle (10) comprend un module de commande de fonctions (FCM) HAVi qui comprend des moyens pour demander les descriptions de fonctions d'un dispositif non-HAVi (23) et des moyens pour transmettre les descriptions de fonction à un poste réseau du réseau HAVi sur lequel est générée une interface utilisateur pour commander le dispositif non-HAVi (23) et comportant également un programme JAVA (HAVLET) qui comprend des moyens pour générer une interface utilisateur avec les descriptions de fonctions du dispositif non-HAVi (23), ce programme JAVA (HAVLET) étant fourni pour un téléchargement dans un dispositif HAVi (31).

8. Une passerelle selon la revendication 7, où le module de commande de fonctions (FCM) comprend des moyens pour traduire les descriptions de fonctions lues à partir du dispositif non-HAVi (23) en un format de données supporté par le système HAVi avant transmission au réseau HAVi.

9. Une passerelle selon la revendication 7, où le programme JAVA (HAVLET) comprend des moyens pour traduire les descriptions de fonctions lues à partir du dispositif non-HAVi (23) en un format de données supporté par le système HAVi.

10. Un produit de programme informatique, sous la forme d'un module de commande de fonctions (FCM) HAVi, directement chargeable dans la mémoire interne d'un dispositif passerelle (10) selon l'une des revendications 7 à 9, comprenant des moyens pour demander des descriptions de fonctions d'un dispositif non-HAVi (23) et des moyens pour transmettre les descriptions de fonctions à un poste réseau d'un réseau HAVi sur lequel est générée une interface utilisateur pour commander le dispositif non-HAVi (23) lorsque ledit produit est exécuté par un processeur du dispositif passerelle (10).

11. Un produit de programme informatique selon la revendication 10, comprenant en outre des moyens pour traduire les descriptions de fonctions lues à partir d'un dispositif non-HAVi (23) en un format de données supporté par le système HAVi avant transmission au réseau HAVi.

12. Un produit de programme informatique selon la revendication 10 ou 11, où les descriptions de fonctions du dispositif non-HAVi (23) sont des descriptions XML, où XML signifie langage de balisage d'extension.

13. Un produit de programme informatique, sous la forme d'un programme JAVA (HAVLET), directement chargeable dans la mémoire interne d'un dispositif HAVi (31) d'un réseau HAVi, comprenant des moyens pour générer une interface utilisateur pour commander un dispositif non-HAVi (23) avec les descriptions de fonctions récupérées à partir du dispositif non-HAVi (23), lorsque ledit produit est exécuté par un processeur dudit dispositif HAVi (31).

14. Un produit de programme informatique selon la revendication 13, où les descriptions de fonctions récupérées sont des descriptions XML traduites du dispositif non-HAVi (23), où XML signifie langage de balisage d'extension, les descriptions XML étant traduites en un format de données supporté par le système HAVi.

15. Un produit de programme informatique selon la revendication 13, comprenant en outre des moyens pour traduire les descriptions de fonctions récupérées du dispositif non-HAVi (23) en un format de données qui est supporté par le système HAVi et où les descriptions de fonctions sont des descriptions XML, où XML signifie langage de balisage d'extension.

16. Un produit de programme informatique selon l'une des revendications 13 à 15, où les moyens pour générer une interface utilisateur comprennent des moyens pour assigner à une description de fonction traduite les représentations graphiques appropriées ainsi qu'un symbole ou une expression qui explique la signification de la description de fonction.

17. Un produit de programme informatique selon la revendication 17, où la représentation graphique est sous la forme d'un bouton, d'un ascenseur, d'un bouton question ou d'une zone de saisie.
